# EUROPÄISCHE PATENTANMELDUNG

(11) **EP 4 375 532 A1**
(43) Veröffentlichungstag der Anmeldung: **29.05.2024**
(21) Anmeldenummer: 23207469.0
(22) Anmeldetag: 02.11.2023
(51) Int. Cl.: F16D 65/00, B60S 1/66, B60S 3/04

(54) **VORRICHTUNG ZUM SAMMELN VON ABRIEBPARTIKELN**

(30) Priorität: 28.11.2022 DE 102022212713
(71) Anmelder: Continental Reifen Deutschland GmbH, 30175 Hannover (DE)
(72) Erfinder: Winkler, Jens, 30165 Hannover (DE)
(74) Vertreter: Continental Corporation

(57) **Zusammenfassung**

Die Erfindung betrifft eine Vorrichtung (10) zum Sammeln von bei der Verwendung eines Fahrzeugs im Radbereich entstehenden Abriebpartikeln (P), mit zumindest einem Auffangprofil (14), welches dazu eingerichtet ist, Abriebpartikel (P) aufzufangen, und einem Sammelbehälter (16) für aufgefangene Abriebpartikel (P).

## Beschreibung

Die Erfindung betrifft eine Vorrichtung zum Sammeln von bei der Verwendung eines Fahrzeugs im Radbereich entstehenden Abriebpartikeln, mit zumindest einem Auffangprofil, welches dazu eingerichtet ist, Abriebpartikel aufzufangen, und einem Sammelbehälter für aufgefangene Abriebpartikel.

Weiterhin betrifft die Erfindung ein Fahrzeug, mit mehreren Rädern und zumindest einer Vorrichtung zum Sammeln von im Nahbereich eines Rads entstehenden Abriebpartikeln.

Ferner betrifft die Erfindung ein Verfahren zum Sammeln von bei der Verwendung eines Fahrzeugs im Radbereich entstehenden Abriebpartikeln mittels einer Vorrichtung, wobei Abriebpartikeln in zumindest einem Auffangprofil der Vorrichtung aufgefangen werden und Abriebpartikeln in einem Sammelbehälter der Vorrichtung gesammelt werden.

Während der Verwendung von Fahrzeugen, insbesondere beim Beschleunigen sowie bei Kurvenfahrten, verschleißen die Reifen des Fahrzeugs. Ebenso kommt es beim Abbremsen des Fahrzeugs zu einer Abnutzung der Bremsbeläge und der Bremsscheibe. Aufgrund der Verschleißeffekte der Reifen und der Bremsen entstehen Abriebpartikel, welche die Umwelt verunreinigen können.

Um die Emissionen von Abriebpartikeln in die Umgebung zu verringern, sind aus dem Stand der Technik Abriebsammler bekannt, welche die Abriebpartikel im Radbereich mittels eines Auffangprofils abfangen. Die gefangenen Abriebpartikel werden in einem Sammelbehälter gesammelt, wobei die Abriebpartikel durch die Schwerkraft in den unter dem Auffangprofil angeordneten Sammelbehälter fallen sollen. Jedoch kann bei den bekannten Abriebsammlern nicht zweifelsfrei sichergestellt werden, dass alle gefangenen Abriebpartikel zuverlässig allein durch die Schwerkraft aus dem Auffangprofil in den Sammelbehälter gelangen. Und sich stattdessen im Auffangprofil sammeln und das zuverlässige Sammeln der Abriebpartikel stören.

Die der Erfindung zugrundeliegende Aufgabe besteht somit darin, das Sammeln von im Radbereich eines Fahrzeugs entstehenden Abriebpartikeln so zu optimieren, dass die im Radbereich gefangenen Abriebpartikel zuverlässig und vollständig in einen Sammelbehälter für Abriebpartikel gelangen, um die Umweltverträglichkeit von Fahrzeugen zu verbessern.

Die Aufgabe wird gelöst durch eine Vorrichtung der eingangs genannten Art, wobei die Vorrichtung ein Spülungssystem aufweist, welches dazu eingerichtet ist, Abriebpartikel aus dem zumindest einen Auffangprofil mittels einer Spülflüssigkeit in den Sammelbehälter zu spülen.

Durch die Verwendung eines Spülungssystems, welches Abriebpartikel aus dem zumindest einen Auffangprofil mittels einer Spülflüssigkeit in den Sammelbehälter spült, wird sichergestellt, dass die im Auffangprofil gefangenen Abriebpartikel vollständig in den Sammelbehälter gelangen. So wird vermieden, dass sich gefangene Abriebpartikel unbeabsichtigt in dem Auffangprofil sammeln und dieses verstopfen könnten. Das Sammeln der Abriebpartikel kann folglich nicht durch bereits gefangene Abriebpartikel gestört werden, sodass die Funktion der Vorrichtung zum Sammeln von Abriebpartikeln jederzeit gewährleistet ist und die Umwelt zuverlässig vor Abriebpartikel geschützt wird. Weiterhin ist eine Vorrichtung zum Sammeln von Abriebpartikeln mit einem Spülungssystem nicht anfällig für feuchtigkeitsbedingte Funktionsbeeinträchtigungen. Regen- oder Spritzwasser kann sogar dazu beitragen, das Spülen der Abriebpartikel aus dem Auffangprofil in den Sammelbehälter zu unterstützen.

Das Auffangprofil weist an seiner einem Rad eines Fahrzeugs zugewandten Innenseite mehrere Auffangöffnungen auf, mittels welcher Abriebpartikel aufgefangen werden können. Vorzugsweise weist das Auffangprofil im Querschnitt ein Tannenbaumprofil auf. Das Tannenbaumprofil weist zwischen den Auffangöffnungen mehrere nebeneinander angeordnete und gleichmäßig voneinander beabstandete Winkelprofile auf. Die Winkelprofile weisen einen pfeilförmigen Querschnitt auf. Durch die pfeilförmigen Winkelprofile werden die aufgefangenen Abriebpartikel daran gehindert, aus dem Auffangprofil herauszufallen, da sich die Abriebpartikel in Partikelführungskanälen sammeln. Vorzugsweise werden die Abriebpartikel entlang der Partikelführungskanäle mittels des Spülungssystem in den Sammelbehälter gespült. Vorzugsweise weist der Sammelbehälter eine Partikeleinlassöffnung auf, durch welche die aus dem Auffangprofil gespülten Abriebpartikel in den Sammelbehälter gelangen. Vorzugsweise sind der Sammelbehälter und das Auffangprofil zerstörungsfrei lösbar miteinander verbunden. Vorzugsweise ist die Vorrichtung zum Sammeln der Abriebpartikel als Nachrüstsystem ausgebildet. Eine als Nachrüstsystem ausgebildete Vorrichtung kann vorzugsweise an beliebigen Fahrzeugen, welche ab Werk keine Vorrichtung zum Sammeln von Abriebpartikeln aufweisen, beispielsweise innerhalb des Radkastens, nachträglich montiert werden. Der Sammelbehälter kann Bestandteil des Spülungssystems sein. Die Spülflüssigkeit kann Wasser sein. Die Spülflüssigkeit kann Regenwasser umfassen. Die Spülflüssigkeit kann ein Frostschutzmittel umfassen, sodass im Winter bei Temperaturen unter dem Gefrierpunkt sichergestellt werden kann, dass die Spülflüssigkeit im Spülungssystem nicht gefriert, um bei jeder Witterung eine einwandfreie Funktion des Spülungssystems sicherzustellen. Das Spülungssystem kann dazu eingerichtet sein, die Abriebpartikel kontinuierlich aus dem zumindest einen Auffangprofil zu spülen. Ferner kann das Spülungssystem dazu eingerichtet sein, die Abriebpartikel temporär, insbesondere gepulst, aus dem zumindest einen Auffangprofil zu spülen.

In einer bevorzugten Ausführungsform der erfindungsgemäßen Vorrichtung umfasst das Spülungssystem zumindest eine Flüssigkeitsleitung, welche dazu eingerichtet ist, die Spülflüssigkeit zum Auffangprofil zu leiten, und/oder umfasst das Spülungssystem eine Flüssigkeitsfördereinrichtung, mittels welcher die Spülflüssigkeit zum Auffangprofil förderbar ist. Die Flüssigkeitsleitung kann aus einem metallischen Material, beispielsweise aus Stahl, Kupfer oder Aluminium und/oder aus einem Kunststoff, beispielsweise aus Polyethylen oder Polypropylen, ausgebildet sein. Die Flüssigkeitsleitung kann als Rohr und/oder als Schlauch ausgebildet sein. Die Flüssigkeitsleitung kann beispielsweise abschnittsweise als Rohr und abschnittsweise als Schlauch ausgebildet sein. Zudem kann die Flüssigkeitsleitung abschnittsweise aus einem metallischen Werkstoff und abschnittsweise aus einem Kunststoff ausgebildet sein. Die Flüssigkeitsfördereinrichtung ist vorzugsweise eine energiebetriebene Flüssigkeitsfördereinrichtung. Vorzugsweise wird die Flüssigkeitsfördereinrichtung mit elektrischer Energie betrieben. Die elektrische Energie zum Betreiben der Flüssigkeitsfördereinrichtung wird vorzugsweise von einem Energiespeicher, insbesondere einer Batterie, der Vorrichtung oder einem Energiespeicher, insbesondere einer Batterie, des Fahrzeugs bereitgestellt. Die Flüssigkeitsfördereinrichtung kann zudem über ein Aggregat eines Fahrzeugs, beispielsweise über einen Riementrieb zum Motor des Fahrzeugs, angetrieben werden. Vorzugsweise ist die Flüssigkeitsfördereinrichtung eine Pumpe, insbesondere eine Flüssigkeitspumpe. Die Flüssigkeitsfördereinrichtung kann beispielsweise als Kreiselpumpe, Membranpumpe oder als Kolbenpumpe ausgebildet sein. Die Flüssigkeitsfördereinrichtung ist vorzugsweise in dem Sammelbehälter angeordnet. Vorzugsweise ist die Flüssigkeitsfördereinrichtung am tiefsten Punkt des Sammelbehälters angeordnet. Mittels der Flüssigkeitsfördereinrichtung wird der Spülflüssigkeit Energie, insbesondere kinetische Energie, zugeführt, um eine Höhendifferenz zwischen dem Sammelbehälter und/oder der Flüssigkeitsfördereinrichtung und dem Eintritt in das Auffangprofil zu überwinden. Je größer die für die Spülflüssigkeit zu überwindende Höhendifferenz ist, desto größer muss die der Spülflüssigkeit mittels der Flüssigkeitsfördereinrichtung zugeführte Energie sein. Über die Förderleistung der Flüssigkeitsfördereinrichtung kann zudem die Strömungsgeschwindigkeit und/oder der Volumenstrom der Spülflüssigkeit beeinflusst werden. Eine höhere Leistung der Flüssigkeitsfördereinrichtung und eine somit höhere Strömungsgeschwindigkeit kann das zuverlässige Spülen auch von längeren Auffangprofilen sicherstellen. Vorzugsweise ist die Flüssigkeitsleitung zerstörungsfrei lösbar mit dem Sammelbehälter und/oder mit dem Auffangprofil verbunden. Die Flüssigkeitsfördereinrichtung kann dazu eingerichtet sein, die die Spülflüssigkeit kontinuierlich zu dem zumindest einen Auffangprofil zu fördern. Ferner kann die Flüssigkeitsfördereinrichtung dazu eingerichtet sein, die Spülflüssigkeit temporär, insbesondere gepulst, und/oder mit einer sich über die Zeit ändernden Strömungsgeschwindigkeit zu dem zumindest einen Auffangprofil zu fördern. Vorzugsweise ist die Flüssigkeitsleitung zudem zerstörungsfrei lösbar und/oder fluidleitend mit der Flüssigkeitsfördereinrichtung verbunden. Die Flüssigkeitsleitung und die Flüssigkeitsfördereinrichtung bilden vorzugsweise ein Flüssigkeitsförderungssystem.

In einer anderen bevorzugten Ausführungsform der erfindungsgemäßen Vorrichtung umfasst das Spülungssystem einen Flüssigkeitssammelbereich für Spülflüssigkeit. Der Flüssigkeitssammelbereich kann im Sammelbehälter angeordnet sein. Der Flüssigkeitssammelbereich kann als Auffangbecken und/oder als Ausgleichsbehälter und/oder als Flüssigkeitsreservoir ausgebildet sein. Der Flüssigkeitssammelbereich kann zudem in Strömungsrichtung hinter dem Sammelbehälter angeordnet und/oder als ein von dem Sammelbehälter getrennter Behälter ausgebildet sein. Vorzugsweise umfasst der Flüssigkeitssammelbereich eine Eintrittsöffnung, durch welche Spülflüssigkeit in den Flüssigkeitssammelbereich eintreten kann, und/oder eine Austrittsöffnung, durch welche Spülflüssigkeit aus dem Flüssigkeitssammelbereich austreten kann. Die Flüssigkeitsfördereinrichtung kann im Flüssigkeitssammelbereich der Spülflüssigkeit angeordnet sein. Vorzugsweise saugt die Flüssigkeitsfördereinrichtung Spülflüssigkeit aus dem Flüssigkeitssammelbereich an.

In einer Weiterbildung der erfindungsgemäßen Vorrichtung umfasst das Spülungssystem einen für die Spülflüssigkeit durchlässigen Filter, mittels welchem Abriebpartikel aus der Spülflüssigkeit herausfilterbar sind. Vorzugsweise ist der Filter in dem Sammelbehälter angeordnet. Zudem kann der Filter in einem separaten Filtergehäuse angeordnet sein. Die aus dem Auffangprofil austretende und mit Abriebpartikeln kontaminierte Spülflüssigkeit wird mittels des Filters gereinigt, sodass Abriebpartikel freie Spülflüssigkeit erneut mittels der Flüssigkeitsfördereinrichtung in das Auffangprofil geleitet werden kann. Vorzugsweise sammeln sich alle aus dem Auffangprofil entfernten Abriebpartikel in dem Filter. Vorzugsweise ist der Filter auswechselbar. Ist der Filter in hohem Maße oder vollständig mit Abriebpartikeln beladen, kann dieser vorzugsweise gegen einen neuen Filter ausgetauscht werden, um die ursprüngliche Filterleistung des Spülsystems wiederherzustellen. Der Filter kann beispielsweise als Papierfilter, Drahtfilter oder Gewebefilter ausgebildet sein.

Es ist ferner eine erfindungsgemäße Vorrichtung vorteilhaft, bei welcher das Spülungssystem eine Überlauföffnung zum Ausleiten überschüssiger Spülungsflüssigkeit aus dem Spülungssystem umfasst. Die Überlauföffnung kann im Sammelbehälter und/oder im Flüssigkeitssammelbereich für Spülflüssigkeit angeordnet sein. Mittels der Überlauföffnung kann sichergestellt werden, dass die Spülflüssigkeitsmenge im Spülungssystem unter einem gewünschten Grenzwert bleibt. Die Spülflüssigkeitsmenge im Spülungssystem kann beispielsweise durch in das Spülungssystem eintretendes Regenwasser zunehmen.

Es ist außerdem eine erfindungsgemäße Vorrichtung bevorzugt, bei welcher das Spülungssystem einen Füllstandssensor umfasst, mittels welchem die Spülflüssigkeitsmenge in einem Bereich des Spülungssystems bestimmbar ist. Der Füllstandssensor kann beispielsweise im Flüssigkeitssammelbereich für Spülflüssigkeit angeordnet sein, um den Spülflüssigkeitsfüllstand im Flüssigkeitssammelbereich zu überwachen. Vorzugsweise ist der Füllstandssensor mit einer elektronischen Datenerfassungseinrichtung und/oder mit einer elektronischen Anzeigevorrichtung datenleitend verbunden, beispielsweise mit einem Steuergerät und/oder mit einer Anzeige des Fahrzeugs, an welchem die Vorrichtung verbaut ist. Sinkt der Füllstand der Spülflüssigkeit im Spülungssystem unter einen definierten Grenzwert, ist davon auszugehen, dass die Spülflüssigkeitsmenge im Spülungssystem zu gering ist, sodass ein Nachfüllen von Spülflüssigkeit notwendig ist. Erfasst der Füllstandssensor einen zu niedrigen Füllstand, erfolgt vorzugsweise ein Nachfüllhinweis. Der Nachfüllhinweis kann beispielsweise optisch mittels einer elektronischen Anzeigevorrichtung, insbesondere mittels einer Warnleuchte oder mittels eines Displays, und/oder akustisch mittels eines Signaltons erfolgen. Insbesondere kann bei einem zu niedrigen Füllstand der Spülflüssigkeit eine Meldung im Cockpit des Fahrzeugs erscheinen.

Die Spülflüssigkeit kann aus dem Spülungssystem ablassbar sein, beispielsweise um die Vorrichtung ohne Spülflüssigkeit bzw. ohne aktives Spülungssystem zu verwenden. Durch das Ablassen der Spülflüssigkeit kann eine frostbedingte Beschädigung des Spülungssystems bei niedrigen Umgebungstemperaturen vermieden werden. Alternativ oder zusätzlich kann die Spülflüssigkeit auswechselbar sein, beispielsweise um verschmutzte Spülflüssigkeit oder Spülflüssigkeit mit einem zu hohen Regenwasseranteil oder einer zu geringen Menge an Frostschutzmittel durch neue Spülflüssigkeit zu ersetzen.

Die der Erfindung zugrundeliegende Aufgabe wird ferner durch ein Fahrzeug der eingangs genannten Art gelöst, wobei die Vorrichtung des erfindungsgemäßen Fahrzeugs nach einer der vorstehend beschriebenen Ausführungsformen ausgebildet ist. Hinsichtlich der Vorteile und Modifikationen des erfindungsgemäßen Fahrzeugs wird somit auf die Vorteile und Modifikationen der erfindungsgemäßen Vorrichtung verwiesen.

Das Fahrzeug kann beispielsweise ein Personenkraftwagen (Pkw), ein Zweirad, beispielsweise ein Motorrad, oder ein Nutzfahrzeug, beispielsweise ein Lastkraftwagen (Lkw) sein. Bei einem mehrere Reifen aufweisenden Fahrzeug ist vorzugsweise jedem Reifen eine Vorrichtung zum Sammeln von Abriebpartikeln zugeordnet. Vorzugsweise ist die Vorrichtung im Nahbereich des jeweiligen Rades, beispielsweise im Radkasten, montiert. Bei einem mehrere Räder aufweisenden Fahrzeug umfasst vorzugsweise jedes Spülungssystem der jeweiligen einem Rad zugeordneten Vorrichtung eine separate Flüssigkeitsfördereinrichtung. Zudem kann eine vorrichtungsexterne Flüssigkeitsfördereinrichtung mehrere Spülungssysteme an mehreren unterschiedlichen Rädern versorgen. Beispielsweise kann eine Flüssigkeitsfördereinrichtung pro Achse und/oder pro Fahrzeug vorgesehen sein.

Die der Erfindung zugrundeliegende Aufgabe wird darüber hinaus durch ein Verfahren der eingangs genannten Art gelöst, wobei Abriebpartikel aus dem zumindest einen Auffangprofil in dem Sammelbehälter mittels einer Spülflüssigkeit durch ein Spülungssystem der Vorrichtung gespült werden. Vorzugsweise ist die Vorrichtung des erfindungsgemäßen Verfahrens nach einer der vorstehend beschriebenen Ausführungsformen ausgebildet. Hinsichtlich weiterer Vorteile und Modifikationen des erfindungsgemäßen Verfahrens wird auf die Vorteile und Modifikationen der erfindungsgemäßen Vorrichtung verwiesen.

In einer bevorzugten Ausführungsform des erfindungsgemäßen Verfahrens wird Spülflüssigkeit mittels einer Flüssigkeitsfördereinrichtung des Spülsystems zum Auffangprofil gefördert. Alternativ oder zusätzlich wird Spülflüssigkeit mittels zumindest einer Flüssigkeitsleitung des Spülsystems zum Auffangprofil geleitet. Alternativ oder zusätzlich wird Spülflüssigkeit entlang zumindest eines Teils des Auffangprofils geleitet, wobei die Spülflüssigkeit innerhalb des zumindest einen Teils des Auffangprofils vorzugsweise in dem Auffangprofil befindliche Abriebpartikel mitnimmt, sodass die Abriebpartikel in den Sammelbehälter gelangen. Alternativ oder zusätzlich wird Spülflüssigkeit mittels eines Filters des Spülungssystems zum Abscheiden von Abriebpartikeln aus der Spülflüssigkeit gefiltert. Mit Abriebpartikeln kontaminierte Spülflüssigkeit fließt zum Abscheiden der Abriebpartikel vorzugsweise durch ein Filtermedium des Filters hindurch. Das Leiten der Spülflüssigkeit entlang zumindest eines Teils des Auffangprofils kann durch die Schwerkraft und/oder mittels einer Flüssigkeitsfördereinrichtung erfolgen.

Es ist ferner ein erfindungsgemäßes Verfahren bevorzugt, bei welchem die Spülflüssigkeit beim Spülen von Abriebpartikeln aus dem zumindest einen Auffangprofil in den Sammelbehälter einem umlaufenden Flüssigkeitskreislauf folgt. Zumindest ein Teil der Spülflüssigkeit zirkuliert vorzugsweise im Spülungssystem. Der Flüssigkeitskreislauf ist vorzugsweise ein geschlossener Kreislauf. Bei einem geschlossenen Kreislauf sind alle Bestandteile des Spülungssystems luft- und/oder flüssigkeitsdicht sowie fluidleitend miteinander verbunden. Der Flüssigkeitskreislauf kann zudem ein offener Kreislauf sein.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße Vorrichtung zum Sammeln von Abriebpartikeln mit einem Spülsystem während des Spülens eines Auffangprofils für Abriebpartikel in einer schematischen Darstellung;
- Fig. 2: ein mit Spülflüssigkeit durchspültes Auffangprofil in einer schematischen Schnittdarstellung; und
- Fig. 3: die in der Fig.1 abgebildete Vorrichtung im verbauten Zustand im Nahbereich eines Rads eines Fahrzeugs in einer schematischen Darstellung.

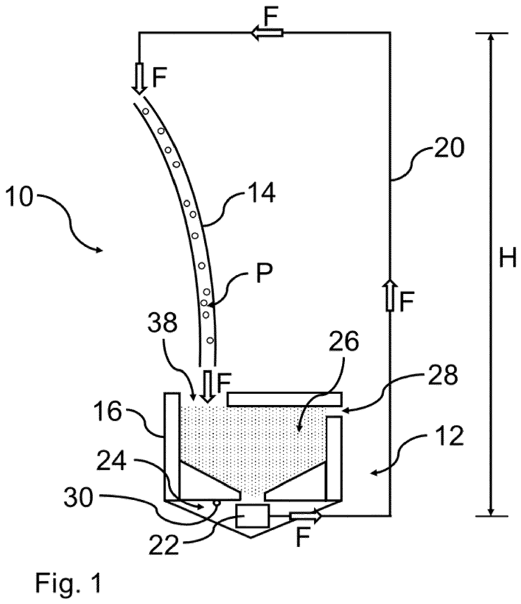

Die Fig. 1 zeigt eine Vorrichtung 10 zum Sammeln von Abriebpartikeln P, welche beispielsweise aufgrund von Reifenabrieb und/oder Bremsenverschleiß bei der Verwendung eines Fahrzeugs im Radbereich entstehen. Die Vorrichtung 10 umfasst ein Auffangprofil 14, mittels welchem die Abriebpartikel P im Radbereich bei der Verwendung eines Fahrzeugs aufgefangen werden, sodass die Abriebpartikel P nicht in die Umgebung gelangen. Unterhalb des Auffangprofils 14 ist ein Sammelbehälter 16 angeordnet. Die mittels des Auffangprofils 14 aufgefangenen Abriebpartikel P gelangen über die Partikeleinlassöffnung 38 in einen Sammelbehälter 16 für Abriebpartikel P.

Um die aufgefangenen Abriebpartikel P zuverlässig und vollständig aus dem Auffangprofil 14 in den Sammelbehälter 16 zu befördern, umfasst die Vorrichtung 10 ein Spülungssystem 12 zum Spülen der Abriebpartikel P aus dem Auffangprofil 14 in den Sammelbehälter 16. Zum Spülen der Abriebpartikel P aus dem Auffangprofil 14 in den Sammelbehälter 16 wird eine Spülflüssigkeit 18 über die gesamte Länge des Auffangprofils 14 durch das Auffangprofil 14 hindurch geleitet. Das Auffangprofil 14 kann zudem nur auf einem Teil seiner gesamten Länge von Spülflüssigkeit 18 durchspült werden, beispielsweise nur im unteren Drittel der Länge des Auffangprofils 14. Die Spülflüssigkeit 18 wird mittels einer Flüssigkeitsfördereinrichtung 22 in der Flüssigkeitsfließrichtung F durch eine Flüssigkeitsleitung 20 am oberen Ende des Auffangprofils 14 in das Auffangprofil 14 hinein gefördert. Die Flüssigkeitsfördereinrichtung 22 und die Flüssigkeitsleitung 20 sind reversibel zerstörungsfrei lösbar und fluidleitend miteinander verbunden. Zudem ist die Flüssigkeitsleitung 20 reversibel zerstörungsfrei lösbar und fluidleitend mit dem oberen Ende des Auffangprofils 14 verbunden. Ist es beabsichtigt, dass nur ein Teil des Auffangprofils 14 mit Spülflüssigkeit 18 gespült werden soll, kann die Flüssigkeitsleitung 20 an einer beliebigen Stelle auf der Länge des Auffangprofils 14 mit dem Auffangprofil 14 reversibel zerstörungsfrei lösbar und fluidleiten verbunden sein. Statt mit dem Auffangprofil 14 verbunden zu sein, kann die Flüssigkeitsleitung 20 zudem ein offenes Ende oder eine Ausnehmung aufweisen, aus welchem die Spülflüssigkeit 18 in ein offenes Ende oder eine Ausnehmung des Auffangprofils 14 strömt.

Beim Spülen des Auffangprofils 14 werden die in dem Auffangprofil 14 aufgefangenen Abriebpartikel P von der durch das Auffangprofil 14 strömenden Spülflüssigkeit 18 mitgenommen. So gelangen die Abriebpartikel P gemeinsam mit der Spülflüssigkeit 18 durch die Partikeleinlassöffnung 38 in den Sammelbehälter 16. Das Auffangprofil 14 kann im Bereich der Partikeleinlassöffnung 38 reversibel zerstörungsfrei und fluidleitend mit dem Sammelbehälter 16 verbunden sein. Zudem kann das untere Ende des Auffangprofils 14 offen sein oder eine Ausnehmung aufweisen, durch welche die Spülflüssigkeit 18 mit den Abriebpartikeln P durch die Partikeleinlassöffnung 38 in den Sammelbehälter 16 strömt. In dem Sammelbehälter 16 ist ein Filter 26 angeordnet. Die mit Abriebpartikeln P kontaminierte Spülflüssigkeit 18 fließt durch das Filtermaterial des Filters 26 hindurch. Das Filtermaterial des Filters 26 ist nur für die Spülflüssigkeit 18 durchlässig, nicht aber für die Abriebpartikel P. Folglich verbleiben die Abriebpartikel P in dem Filter 26 und werden so von der Spritzflüssigkeit 18 getrennt. Der Filter 26 ist auswechselbar. Hat der Filter 26 seine maximale Aufnahmekapazität für Abriebpartikel P erreicht, kann dieser gegen einen neuen, sauberen Filter 26 ausgetauscht werden. Für einen Filterwechsel kann der Filter 26 beispielsweise seitlich aus dem Sammelbehälter 16 entnommen werden.

Die den Filter durchströmte, von Abriebpartikeln gereinigte Spülflüssigkeit 18 sammelt sich in einem Flüssigkeitssammelbereich 24. Der Flüssigkeitssammelbereich 24 ist unterhalb des Filters 26 in dem Sammelbehälter 16 angeordnet. Der Flüssigkeitssammelbereich 24 kann zudem getrennt von dem Sammelbehälter 16, beispielsweise als separater Behälter, in der Spülflüssigkeitsfließrichtung F hinter dem Sammelbehälter 16 angeordnet sein. Der Flüssigkeitssammelbereich 24 dient als Spülflüssigkeitsreservoir für Spülflüssigkeit 18. Der Sammelbehälter 16 umfasst eine Überlauföffnung 28, aus welcher überschüssige Spülflüssigkeit 18 austreten kann. Gelangt beispielsweise Regenwasser in das Spülsystem 12, kann die Spülflüssigkeitsmenge im Spülsystem 12 ansteigen. Über die Überlauföffnung 28 kann Spülflüssigkeit 18 aus dem System herausfließen, sodass es beispielsweise nicht zu einem Überdruck im Sammelbehälter 16 und/oder im Flüssigkeitssammelbereich 24 kommen kann.

Des Weiteren ist in dem Flüssigkeitssammelbereich 24 ein Füllstandssensor 30 angeordnet. Mittels des Füllstandssensors 30 kann ermittelt werden, ob eine für die Funktion des Spülungssystems 12 ausreichende Menge Spülflüssigkeit 18 im Spülungssystem 12, insbesondere im Flüssigkeitssammelbereich 24, vorhanden ist. Fällt der Füllstand im Flüssigkeitssammelbereich 24 unter einen Grenzwert, sodass der Füllstandssensor 30 oberhalb der Flüssigkeitsoberfläche liegt, ist es sehr wahrscheinlich, dass die Menge an Spülflüssigkeit 18 im Spülungssystem 12 nicht mehr ausreichend ist, um eine einwandfreie Funktion sicherzustellen. Erfasst der Füllstandssensor 30, dass der Füllstand der Spülflüssigkeit 18 zu niedrig ist, kann mittels einer elektronischen Datenverarbeitungseinrichtung, beispielsweise einem Steuergerät eines Fahrzeugs, und/oder mittels einer elektronischen Anzeigevorrichtung, beispielsweise das Display im Cockpit eines Fahrzeugs, ein Warnhinweis angezeigt werden. Zudem kann ein akustischer Hinweiston auf den zu niedrigen Füllstand hinweisen.

Das Spülsystem 12 umfasst ferner eine Flüssigkeitsfördereinrichtung 22. Mittels der Flüssigkeitsfördereinrichtung 22 wird die Spülflüssigkeit 18 gefördert. Durch das Fördern mittels der Flüssigkeitsfördereinrichtung 22 wird der Spülflüssigkeit 18 kinetische Energie zugeführt, sodass die Spülflüssigkeit 18 eine Höhendifferenz H zwischen der Position der Flüssigkeitsfördereinrichtung und dem höchsten Punkt der Vorrichtung, insbesondere dem oberen Ende des Auffangprofils 14, überwinden kann. Zudem wird mittels der Flüssigkeitsfördereinrichtung 22 eine gewünschte Strömungsgeschwindigkeit sowie ein gewünschter Druck in der Flüssigkeitsleitung 20 und dem Auffangprofil 14 eingestellt. Je länger die Flüssigkeitsleitung 20 und/oder das Auffangprofil 14 ist, desto mehr Energie muss der Spülflüssigkeit mittels der Flüssigkeitsfördereinrichtung 22 zugeführt werden, um Druckverluste auszugleichen und eine gewünschte Strömungsgeschwindigkeit zu erreichen.

Die Flüssigkeitsfördereinrichtung 22 kann energiebetrieben, insbesondere elektrisch betrieben, sein. Zudem kann die Flüssigkeitsfördereinrichtung 22 mittels eines Aggregats eines Fahrzeugs, in welchem die Vorrichtung 10 verbaut ist, angetrieben werden, beispielsweise über einen mit dem Motor des Fahrzeugs verbundenen Riemen. Die Flüssigkeitsfördereinrichtung 22 kann als Strömungspumpe, insbesondere als axial oder radial arbeitende Kreiselpumpe, ausgebildet sein. Zudem kann Flüssigkeitsfördereinrichtung 22 beispielsweise als Membranpumpe oder Kolbenpumpe ausgebildet sein. Die Flüssigkeitsfördereinrichtung 22 ist in dem Flüssigkeitssammelbereich 24 angeordnet. Die Flüssigkeitsfördereinrichtung 22 kann zudem in Spülflüssigkeitsfließrichtung F hinter dem Flüssigkeitssammelbereich 24 angeordnet und mittels einer Flüssigkeitsleitung 20 mit dem Flüssigkeitssammelbereich 24 fluidleitend verbunden sein.

Die Flüssigkeitsfördereinrichtung 22 saugt saubere, mittels des Filters 26 gereinigte Spülflüssigkeit 18 aus dem Flüssigkeitssammelbereich 24 an und fördert die angesaugte Spülflüssigkeit 20 in die Flüssigkeitsleitung 20. Die Flüssigkeitsfördereinrichtung 22, die Flüssigkeitsleitung 20, das Auffangprofil 14, der Sammelbehälter 16 mit dem Filter 26 und der Flüssigkeitssammelbereich 24 bilden somit einen umlaufenden Flüssigkeitskreislauf.

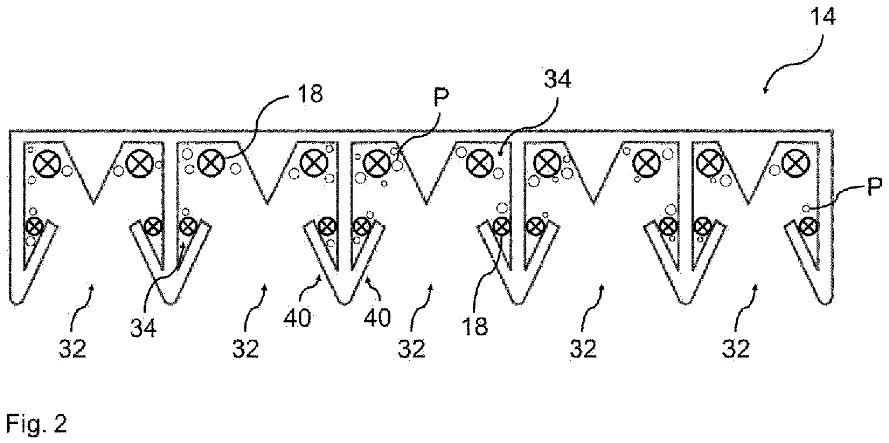

Die Fig. 2 zeigt ein Auffangprofil 14 für eine Vorrichtung 10 zum Sammeln von Abriebpartikeln P im Querschnitt. Das Auffangprofil 14 weist mehrere in Längsrichtung des Auffangprofils 14 verlaufende Partikelführungskanäle 34 auf. Die beispielsweise durch Reifenabrieb entstandenen Abriebpartikel P gelangen über mehrere nebeneinander angeordnete Auffangöffnungen 32 in die Partikelführungskanäle 34. Beim Spülen des Auffangprofils 14 mit Spülflüssigkeit 18 mittels des Spülungssystems 12 werden die Partikelführungskanäle 34 von Spülflüssigkeit 18 durchströmt, sodass die in den Partikelführungskanälen 34 befindlichen Abriebpartikel P aus dem Auffangprofil 14 in den Sammelbehälter 16 gespült werden. Das Auffangprofil 14 weist im Querschnitt ein Tannenbaumprofil auf. Das Tannenbaumprofil wird insbesondere die auf Stegen und zwischen den Auffangöffnungen 32 angeordneten dachartigen Winkelprofile 40 gebildet. Das Auffangprofil 14 kann zudem abschnittsweise oder vollständig ein andersartig ausgebildetes Profil im Querschnitt aufweisen.

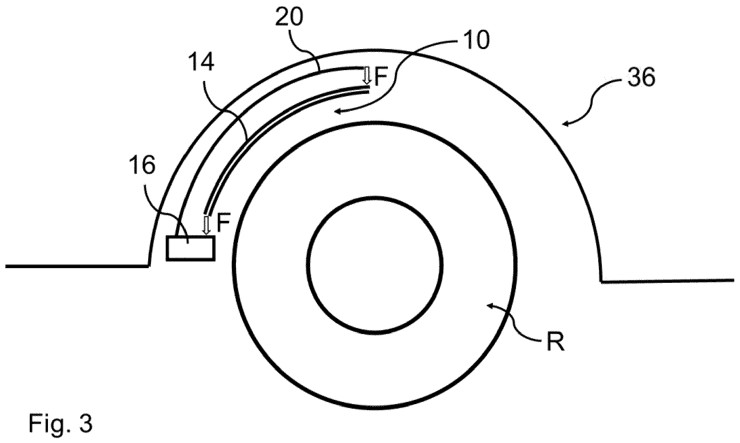

In der Fig. 3 ist eine schematische Darstellung des Nahbereichs eines Rads R eines Fahrzeugs zu sehen, wobei im Radkasten 36 des Fahrzeugs die Vorrichtung 10 zum Sammeln von Abriebpartikeln P angeordnet ist, mittels welcher beispielsweise durch Reifenabrieb des Rads R oder durch Bremsenverschleiß entstandene Abriebpartikel P gesammelt werden. Die in dem das Rad abschnittsweise umlaufenden Auffangprofil 14 aufgefangenen Abriebpartikel P werden mittels Spülflüssigkeit 18 in den unter dem Auffangprofil 14 angeordneten Sammelbehälter 16 gespült, wobei die Spülflüssigkeit 18 aus dem Sammelbehälter durch die Flüssigkeitsleitung 20 und das Auffangprofil 14 zurück in den Sammelbehälter 16 zirkuliert.

### Bezugszeichenliste

- 10: Vorrichtung
- 12: Spülungssystem
- 14: Auffangprofil
- 16: Sammelbehälter
- 18: Spülflüssigkeit
- 20: Flüssigkeitsleitung
- 22: Flüssigkeitsfördereinrichtung
- 24: Flüssigkeitssammelbereich
- 26: Filter
- 28: Überlauföffnung
- 30: Füllstandssensor
- 32: Auffangöffnungen
- 34: Partikelführungskanäle
- 36: Radkasten
- 38: Partikeleinlassöffnung
- 40: Winkelprofile

- F: Spülflüssigkeitsfließrichtung
- H: Höhendifferenz
- P: Abriebpartikel
- R: Rad

## Patentansprüche

1. Vorrichtung (10) zum Sammeln von bei der Verwendung eines Fahrzeugs im Radbereich entstehenden Abriebpartikeln (P), mit
- zumindest einem Auffangprofil (14), welches dazu eingerichtet ist, Abriebpartikel (P) aufzufangen, und
- einem Sammelbehälter (16) für aufgefangene Abriebpartikel (P),
**gekennzeichnet durch** ein Spülungssystem (12), welches dazu eingerichtet ist, Abriebpartikel (P) aus dem zumindest einen Auffangprofil (14) mittels einer Spülflüssigkeit (18) in den Sammelbehälter (16) zu spülen.

2. Vorrichtung (10) nach Anspruch 1,
**dadurch gekennzeichnet, dass** das Spülungssystem (12)
- zumindest eine Flüssigkeitsleitung (20) umfasst, welche dazu eingerichtet ist, die Spülflüssigkeit (18) zum Auffangprofil (14) zu leiten, und/oder
- zumindest eine Flüssigkeitsfördereinrichtung (22) umfasst, mittels welcher die Spülflüssigkeit (18) zum Auffangprofil (14) förderbar ist.

3. Vorrichtung (10) nach einem der Ansprüche 1 oder 2,
**dadurch gekennzeichnet, dass** das Spülungssystem (12) einen Flüssigkeitssammelbereich (24) für Spülflüssigkeit (18) umfasst.

4. Vorrichtung (10) nach einem der vorstehenden Ansprüche,
**dadurch gekennzeichnet, dass** das Spülungssystem (12) einen für die Spülflüssigkeit (18) durchlässigen Filter (26) umfasst, mittels welchem Abriebpartikel (P) aus der Spülflüssigkeit (18) heraus filterbar sind.

5. Vorrichtung (10) nach einem der vorstehenden Ansprüche,
**dadurch gekennzeichnet, dass** das Spülungssystem (12) eine Überlauföffnung (28) zum Ausleiten überschüssiger Spülflüssigkeit (18) aus dem Spülungssystem (12) umfasst.

6. Vorrichtung (10) nach einem der vorstehenden Ansprüche,
**dadurch gekennzeichnet, dass** das Spülungssystem (12) einen Füllstandssensor (30) umfasst, mittels welchem die Spülflüssigkeitsmenge in einem Bereich des Spülungssystems (12) bestimmbar ist.

7. Fahrzeug, mit
- mehreren Rädern (R); und
- zumindest einer Vorrichtung (10) zum Sammeln von im Nahbereich eines Rads (R) entstehenden Abriebpartikeln (P);
**dadurch gekennzeichnet, dass** die Vorrichtung (10) nach einem der vorstehenden Ansprüche ausgebildet ist.

8. Verfahren zum Sammeln von bei der Verwendung eines Fahrzeugs im Radbereich entstehenden Abriebpartikeln (P) mittels einer Vorrichtung (10), insbesondere einer Vorrichtung (10) nach einem der Ansprüche 1 bis 6, mit den Schritten:
- Auffangen von Abriebpartikeln (P) in zumindest einem Auffangprofil (14) der Vorrichtung (10);
- Sammeln von Abriebpartikeln (P) in einem Sammelbehälter (16) der Vorrichtung (10);
**gekennzeichnet durch** den Schritt:
- Spülen von Abriebpartikeln (P) aus dem zumindest einen Auffangprofil (14) in den Sammelbehälter (16) mittels einer Spülflüssigkeit (18) durch ein Spülungssystem (12) der Vorrichtung (10).

9. Verfahren nach Anspruch 8,
**gekennzeichnet durch** einen, mehrere oder sämtliche der folgenden Schritte:
- Fördern von Spülflüssigkeit (18) zum Auffangprofil (14) mittels einer Flüssigkeitsfördereinrichtung (22) des Spülungssystems (12);
- Leiten von Spülflüssigkeit (18) zum Auffangprofil (14) mittels zumindest einer Flüssigkeitsleitung (20) des Spülungssystems (12);
- Leiten von Spülflüssigkeit (18) entlang zumindest eines Teils des Auffangprofils (14), wobei die Spülflüssigkeit (18) innerhalb des zumindest einen Teils des Auffangprofils (14) vorzugsweise in dem Auffangprofil (14) befindliche Abriebpartikel (P) mitnimmt, sodass die Abriebpartikel (P) in den Sammelbehälter (16) gelangen;
- Filtern der Spülflüssigkeit (18) mittels eines Filters (26) des Spülungssystems (12) zum Abscheiden von Abriebpartikeln (P) aus der Spülflüssigkeit (18).

10. Verfahren nach einem Ansprüche 8 oder 9,
**dadurch gekennzeichnet, dass** die Spülflüssigkeit (18) beim Spülen von Abriebpartikeln (P) aus dem zumindest einen Auffangprofil (14) in den Sammelbehälter (16) einem umlaufenden Flüssigkeitskreislauf folgt.
